# EUROPÄISCHE PATENTSCHRIFT

(11) **EP 2 783 237 B1**
(45) Veröffentlichungstag und Bekanntmachung des Hinweises auf die Patenterteilung: **01.12.2021**
(21) Anmeldenummer: 12798210.6
(22) Anmeldetag: 21.11.2012
(51) Int. Cl.: G01S 13/931, G01S 7/40, G01S 13/38

(54) **RADARGERÄT UND VERFAHREN ZUR ERKENNUNG EINES AUSFALLS EINES EMPFANGSKANALS EINES RADARGERÄTES**
RADAR DEVICE WITH CHANNEL-FAILURE IDENTIFICATION, AND A METHOD FOR IDENTIFYING A CHANNEL-FAILURE OF A RADAR DEVICE
APPAREIL RADAR ET PROCÉDÉ POUR DÉTECTER UNE PANNE D'UN CANAL DE RÉCEPTION D'UN APPAREIL RADAR

(30) Priorität: 24.11.2011 DE 102011055693
(43) Veröffentlichungstag der Anmeldung: 01.10.2014
(73) Patentinhaber: HELLA GmbH & Co. KGaA, 59552 Lippstadt (DE)
(72) Erfinder: HESSE, Thomas, 33098 Paderborn (DE)
(74) Vertreter: Graefe, Jörg
(86) Internationale Anmeldenummer: PCT/EP2012/073201
(87) Internationale Veröffentlichungsnummer: WO 2013/076126

(56) Entgegenhaltungen:
- EP-A1- 1 141 744
- DE-A1-102009 002 143
- DE-B4- 10 050 278
- JP-A- 2004 171 402
- JP-A- 2008 032 495
- JP-B2- 3 244 792
- US-A- 4 893 125
- US-A- 5 325 096
- US-A- 5 867 536

## Beschreibung

Die Erfindung betrifft ein Radargerät zum Senden und Empfangen eines Signals in einem Frequenzband zur Zieldetektion mit den Merkmalen des Oberbegriffs des Anspruchs 1.

Aus der Patentschrift DE 100 50 278 B4 ist ein derartiges Radargerät bekannt. Es kann dazu benutzt werden, mit einem LFMSK-Sendeverfahren die Entfernung und/oder Relativgeschwindigkeit eines Fahrzeugs zu einem Objekt zu ermitteln. Die Abkürzung steht dabei für *Linear Frequency Modulated Shift Keying.*

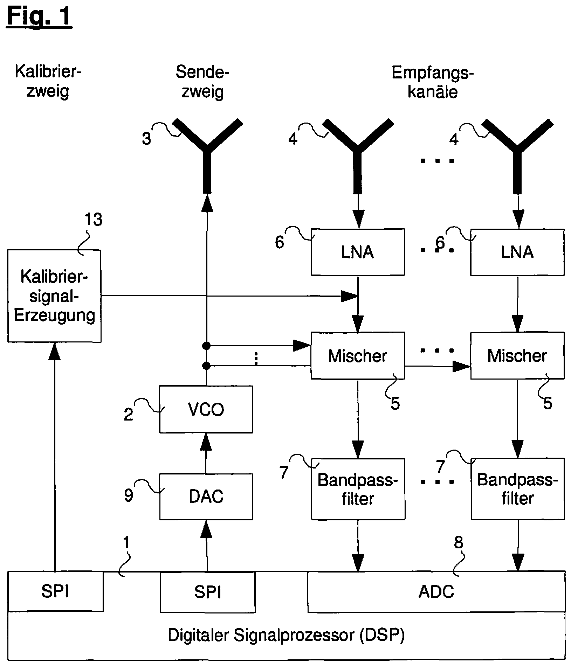

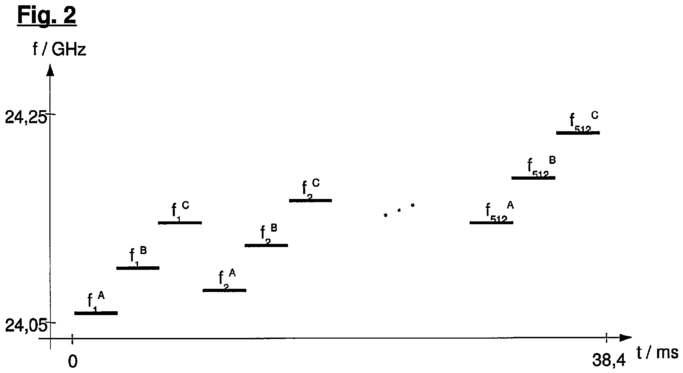

Ein Radargerät mit den o. g., Merkmalen der Anmelderin ist anhand der Fig. 1 und 2 näher erläutert. Es zeigt:
- Fig. 1: eine schematische Darstellung eines Radargeräts gemäß dem Stand der Technik und
- Fig. 2: einen Signalverlauf bei einem Verfahren gemäß dem Stand der Technik.

In der Fig. 1 sind das Steuermittel 1, der Oszillator 2, die Sendeantenne 3, die Empfangsantennen 4 und die Mischer 5 dargestellt.

Das Steuermittel kann den Oszillator 2 ansteuern. Dazu ist ein Ausgang des Steuermittels 1 mit einem Digital-Analog-Konverter 9 verbunden, der einen digital vorgegebenen Wert in eine analoge Spannung wandelt.

Durch Ansteuerung des Oszillators 2 durch das Steuermittel 1 kann der Oszillator 2 das Signal so erzeugen, dass es verschiedene Signalanteile *A*, *B*, *C*, ... hat. Jeder Signalanteil *A*, *B*, *C*, ... des Signals weist eine Folge von Signalfragmenten *Aᵢ*, *Bᵢ, Cᵢ*, ... auf. Erste Signalfragmente *A*₁, *B*₁, *C*₁, ... der verschiedenen Signalanteile *A*, *B, C*, ... des Signals haben unterschiedliche Frequenzen *f*₁*^{A}*, *f*₁*^{B}*, *f*₁*^{C},* ... und folgen aufeinander. An die ersten Signalfragmente *A*₁, *B*₁, *C*₁, ... schließen sich weitere Signalfragmente *Aᵢ*, *Bᵢ, Cᵢ*, ... der Signalanteile *A, B, C*, ... des Signals an, die ebenfalls aufeinander folgen.

Die Frequenz *fᵢ^{A}, fᵢ^{B}, fᵢ^{C}*, ... der Signalfragmente *Aᵢ*, *Bᵢ, Cᵢ*, ... eines Signalanteils *A*, *B, C*, ... des Signals erhöht sich während eines Taktes entweder von Signalfragment zu Signalfragment um ein Frequenzinkrement Δ*f* oder erniedrigt sich während des Taktes von Signalfragment zu Signalfragment um das Frequenzinkrement Δ*f*. Ebenso ist es möglich, dass die Frequenz *fᵢ^{A}*, *fᵢ^{B}, fᵢ^{C}*, ... der Signalfragmente *Aᵢ*, *Bᵢ, Cᵢ*, ... eines Signalanteils *A, B, C*, ... während eines Taktes gleich bleibt.

Die Signalfragmente, auch als *bursts* bezeichnet, haben zum Beispiel eine Länge von 25 µs. Die Frequenz *fᵢ^{A}, fᵢ^{B}, fᵢ^{C}*, ... innerhalb eines Signalfragmentes *Aᵢ*, *Bᵢ, Cᵢ*, .. eines beliebigen Signalanteils *A*, *B*, *C*, ... des Signals ist konstant und kann während eines Taktes ausgehend von einer Frequenz *f*₀*^{A}, f*₀*^{B}*, *f*₀*^{C},* ... von einem Signalfragment *A*₀, *B*₀, *C*₀, ... eines Signalanteils *A*, *B*, *C*, ... zum nächsten Signalfragment *A*₁, *B*₁, *C*₁, ... des gleichen Signalanteils *A*, *B*, *C*, ... des Signals um ein vorzugsweise festes Frequenzinkrement Δ*f* erhöht oder erniedrigt werden oder gleich bleiben. Es ergibt sich z. B. somit für den Signalanteil *A : fᵢ^{A}* = *f*₀*^{A}* + *i·*Δ*f* mit *i* = 1,..., *N* -1. Eine typische Größe für *N*, d. h. für die Anzahl der Signalfragmente *Aᵢ*, *Bᵢ*, *Cᵢ*, ... eines Signalanteils *A* , *B,* C , ... pro Takt ist 512. Je nach dem, ob die Frequenz der Signalfragmente innerhalb eines Taktes erhöht oder verringert wird, d.h. ob Δ*f* > 0, Δ*f* < 0 oder Δ*f* = 0 ist, bezeichnet man einen Takt auch als *upchirp, downchirp* oder *Dopplerchirp. Upchirps, downchirps* und/oder *Dopplerchirps* werden vorzugsweise abwechselnd gesendet.

Die verschiedenen Signalanteile *A*, *B*, *C*, ... des Signals sind ineinander verschachtelt, d.h. dass die Signalfragmente *Aᵢ*, *Bᵢ*, *Cᵢ*, ... der verschiedenen Signalanteile *A*, *B*, *C*, ... in einer vorzugsweise festen Reihenfolge aufeinander folgen, wie es in Fig. 2 für einen *upchirp* dargestellt ist. Die Frequenzen der ersten Signalfragmente *A*, *B*, *C*, ... der verschiedenen Signalanteile *A*, *B*, *C*, ... unterscheiden sich um eine Differenz, die im Vergleich zu den Frequenzen sehr klein ist. Auch die Frequenzinkremente Δ*f* sind im Vergleich zu den Frequenzen der verschiedenen Signalanteile *A*, *B*, *C*, ... sehr klein, sofern sie kleiner oder größer als null sind.

Der innerhalb eines Taktes von 38,4 ms durch die Signale A, B oder C jeweils überstrichene Frequenzbereich beträgt typischerweise 90 MHz. Die Frequenzdifferenzen *fᵢ^{B} - fᵢ^{A}* bzw. *fᵢ^{C} - fᵢ^{B}* betragen jeweils etwa 1,2 MHz. Die Wahl dieser Parameter wird neben staatlichen Vorgaben an die belegte Bandbreite des zugewiesenen Frequenzbandes vorwiegend durch die Anforderungen an die Zieldetektion bestimmt, die mittels des Radargerätes erfolgen soll.

Das vom Oszillator 2 erzeugte Signal wird über die Sendeantenne 3 ausgesendet.

Das über die Sendeantenne 3 ausgesendete Signal kann von einem oder mehreren Zielen reflektiert werden und die Reflektionen können, im Regelfall gemischt mit Signalen aus anderen Quellen, von wenigstens zwei Empfangsantennen 4 aufgenommen werden. Die von den Empfangsantennen 4 aufgenommenen Signale werden als Empfangssignale bezeichnet. Die Empfangssignale werden zunächst mit einem Verstärker 6 verstärkt und in dem Mischer 5 mit dem Signal am Ausgang des Oszillators 2 gemischt, so dass Nutzsignale entstehen, die einen Frequenzanteil in der Basisbandlage haben. Aus den Nutzsignalen die mittels eines Bandpassfilters 7 gefiltert werden, werden im Steuermittel 1, insbesondere aus einer Dopplerverschiebung und einer Phasenverschiebung, wie in der Patentschrift DE 100 50 278 B4 offenbart ist, der Abstand und die Relativgeschwindigkeit eines Reflektionen verursachenden Ziels ermittelt. Dazu werden die Nutzsignale am Eingang des Steuermittels mittels eines Analog-Digital-Konverters 8 digitalisiert.

Aufgrund von Laufzeitdifferenzen an den zwei Empfangsantennen 4 kann der Einfallswinkel der Reflektionen ermittelt werden. Die so gewonnenen Informationen und weitere Informationen können dann einer weiteren Verarbeitung zugeführt werden.

Zwischen den Takten, in denen beim Betrieb eines vorgenannten Radargerätes up*chirps, downchirps* oder *Dopplerchirps* gesendet werden, werden in bestimmten Abständen so genannte Kalibrierungstakte oder Kalibrierungszyklen eingeschoben. Diese Kalibrierungszyklen haben im Wesentlichen zwei Aufgaben:
- die Kompensation einer Frequenzdrift des 24 GHz- Mischers: In der Regel wird ein spannungsgesteuerter Oszillator (VCO) verwendet, bei dem es zu der Frequenzdrift kommen kann, vorwiegend bedingt durch die Sprungtemperaturänderung im laufenden Betrieb, aber auch durch andere Effekte, wie beispielsweise *loadpulling* oder Alterung. Die Kompensation der Frequenzdrift ist erforderlich, um ein Überschreiten der jeweils gesetzlich vorgegebenen Frequenzbandgrenzen (Eckfrequenzen) unter allen Umständen zu vermeiden. Die Kompensation erfolgt in jedem Kalibrierungszyklus durch eine Anpassung des Einstellungsbereiches des spannungsgesteuerten Oszillators bzw. der entsprechenden vom Steuermittel vorgegebenen Werte, mit welchem der spannungsgesteuerte Oszillator eingestellt wird.
- Die Kompensation der Nichtlinearität der Kennlinie des spannungsgesteuerten Oszillators: Das LFMSK-Sendeverfahren sieht ein verschachteltes Senden der drei Signalanteile A, B und C nach Fig. 2 vor, wobei jeder der drei Signalanteile einen Frequenzverlauf mit äquidistanten Frequenzstufen hat. Die Einhaltung dieser konstanten Abstände zwischen zwei benachbarten Frequenzen eines Signalanteils ist von eminenter Bedeutung für die Zieldetektion. Aufgrund der Nichtlinearität der Kennlinie des spannungsgesteuerten Oszillators (Frequenz über Einstellspannung) ergeben sich für das Einstellen äquidistanter Frequenzstufen nicht äquidistante Einstellspannungen bzw. vom Steuermittel an den Digital-Analog-Konverter vorgegebenen nicht äquidistante Werte. Diese müssen in jedem Kalibrierungszyklus für jede der einzustellenden Sendefrequenzen neu berechnet werden, da der Verlauf der Kennlinie des spannungsgesteuerten Oszillators von vielen Faktoren wie beispielsweise der Temperatur, *Loadpulling* oder Alterung abhängt und sich somit im laufenden Betrieb permanent ändert.

Die Kalibrierung des spannungsgesteuerten Oszillators erfolgt bei dem Radargerät der Anmelderin über ein im Steuermittel 1 erzeugtes Kalibrierungssignal, welches anstelle eines Empfangssignals einem Mischer 5 zugeführt wird. Im Mischer 5 wird das Kalibrierungssignal mit dem vom spannungsgesteuerten Oszillator 2 erzeugten Signals gemischt. Das gemischte Signal wird im Weiteren über den Empfangskanal dem Steuermittel 1 zugeführt und zur Kalibrierung des spannungsgesteuerten Oszillators 2 verwendet.

Neben einer Kalibrierung ist mit dem in der Figur 1 dargestellten Radargerät der Anmelderin auch eine Erkennung eines Ausfalls eines Empfangskanals des Radargerätes möglich. Die Ausfallerkennung ist im laufenden Betrieb, d.h. während der *upchirps,* der *downchirps* oder der *Dopplerchirps* möglich.

Das durch eine Empfangsantenne 4 aufgenommene hochfrequente Signal, welches die Reflexionen des gesendeten Signals an zu detektierten Objekten in der Umgebung des Radargerätes darstellt, wird über einen Verstärker 6 dem Mischer 5 zugeführt. Dort entsteht durch die (kohärente) Mischung mit dem vom spannungsgesteuerten Oszillator 2 erzeugten Signal ein Basisbandsignal, dessen Amplitudenverlauf bei einem idealen Mischer allein durch die Phasenlage des Empfangssignals relativ zum vom spannungsgesteuerten Oszillator erzeugten Signal bestimmt ist. Das Ausgangssignal eines realen Mischers 5 enthält jedoch neben dem genannten Mischprodukt zusätzlich einen so genannten parasitären Anteil, der auch als Mischerbias bezeichnet wird.

Dieser Mischerbias ist abhängig von der Absolutfrequenz des vom spannungsgesteuerten Oszillators erzeugten Signals bei 24 GHz. Im genutzten Frequenzband der Breite 100 MHz bzw. 200 MHz kann näherungsweise von einer linearen Abhängigkeit ausgegangen werden. Die genauen Parameter dieser Abhängigkeit sind jedoch von Mischer 5 zu Mischer 5 bedingt durch Bauteil- und Einlöttoleranzen der Hochfrequenzbauelemente, insbesondere der Mischerdioden, sowohl quantitativ als auch qualitativ zufällig und variierend.

Da die Dynamik des Mischerbias in den Ausgangssignalen der Mischer der Empfangskanäle ohne weitere Maßnahmen beträchtlich sein könnte und eine deutliche Verschlechterung der Zieldetektion bewirken könnte, ist die sich an dem Mischer anschließende Analogfilterung nicht nur als Tiefpassfilter zur Begrenzung der Rauschleistung ausgelegt sondern als Bandpassfilter 7, um die niederfrequente Mischerbias im Empfangssignal zu dämpfen. Dennoch ist der gedämpfte Anteil des Mischerbias in den Empfängersignalen präsent und ist in dieser Form Basis für die Erkennung eines Kanalausfalls. Diese Erkennung erfolgt digital, da das Ausgangssignal des Bandpass Filters ohnehin von einem Analog-Digital-Konverter 8 für die weiteren Signalverarbeitungsmittel in eine Auflösung von 12 Bit analog-digital gewandelt wird.

Die der Anmelderin bekannte Möglichkeit der Erkennung eines Kanalausfalls besteht nun darin, den Mischerbias, welcher wegen seiner geringen Frequenz zeitlich nur sehr langsam veränderlich ist, durch einen adaptiven Algorithmus zu schätzen. Liefert dieser Algorithmus einen erwarteten Signalanteil, so kann davon ausgegangen werden, dass der Teil des Empfangskanals vom Mischer 5 bis zum Analog-Digital-Konverter 8 ohne Störung arbeitet. Werden dagegen keine erwarteten Signalanteile geliefert, so ist ein Ausfall des Kanals, beispielsweise durch eine Kontaktunterbrechung oder einen Bauteildefekt zwischen dem Mischer 5 und dem Analog-Digital-Konverter 8 sehr wahrscheinlich.

Die Erkennung eines Kanalausfalls benötigt Speicher- und Rechenkapazitäten des Steuermittels 1, die, da die Erkennung eines Kanalausfalls laufend während der Zieldetektion erfolgt, zusätzlich zu den Speicher- und Rechenkapazitäten des Steuermittels 1 für die Zieldetektion vorgehalten werden müssen. Dieses kann als Nachteil empfunden werden.

Ferner erforderte die Zieldetektion in den Frequenzbereichen des Mischerbias eine starke Dämpfung des Basisbandsignals in den Empfangskanälen. Dies ist für die Erkennung eines Kanalausfalls kontraproduktiv, da der Mischerbias dadurch unter Umständen so stark gedämpft wird, dass ein funktionstüchtiger Empfangskanal fälschlicherweise als defekt erkannt werden kann.

Bei einem aus dem Dokument US 4 893 125 bekannten Radargerät wird das Signal, welches zur Detektion von Objekten genutzt wird, zugleich auch zum Erkennen einer blockierten Antenne genutzt. Auch bei der aus dem Dokument US 5 325 096 bekannten technischen Lehre wird das Signal, welches zur Detektion von Objekten genutzt wird, zugleich auch zur Erkennung einer Fehlfunktion des Radargeräts genutzt. Die Nutzung des Signals, dass für die Detektion von Objekten genutzt wird, zugleich auch für die Detektion einer Fehlfunktion des Radargerätes zu nutzen, hat den Nachteil, dass nicht zwischen einem Ausfall eines Kanals und einer Störung durch ein Objekt oder das Fehlen eines Objektes im Detektionsbereichs des Radargerätes unterschieden werden kann.

Ferner ist aus dem Dokument US 5 867 536 A eine Radareinrichtung bekannt, die so eingerichtet ist, dass regelmäßig eine Kalibrierung durchgeführt wird, mit der die Bandmitte und die Bandbreite des modulierten Signals festgelegt werden kann. Eine Detektion eines Kanalausfalls ist nicht vorgesehen.

Das Dokument JP 3 244 792 B2 offenbart ein Radargerät mit einem Schaltkreis zur Erkennung eines Ausfalls eines Empfangskanals. Dazu wird der Mischerbias der durch das Mischen des Empfangssignals erzeugt wird, dem Schaltkreis zur Erkennung eines Kanalausfalls zugeführt. Die Spannung des Mischerbias wird von dem Schaltkreis mit einem vorgegebenen Wert verglichen. Weicht die Spannung des Mischerbias um einen vorgegebenen Betrag von dem vorgegebenen Wert ab, wird ein Signal erzeugt, dass den Kanalausfall anzeigt. Die Erkennung eines Kanalausfalls bleibt unbeeinflusst von Maßnahmen für die Detektion eines Ziels, da der Schaltkreis zur Erkennung des Kanalausfalls genutzt wird, der von der Zieldetektion unabhänigig ist.

Der vorliegenden Erfindung lag die Aufgabe zu Grunde, ein Radargerät vorzuschlagen, mit dem eine Erkennung eines Kanalausfalls möglich ist, der keine zusätzlichen Speicher- oder Rechenkapazitäten erfordert.

Diese Aufgabe wird erfindungsgemäß durch ein Radargerät mit den Merkmalen des Anspruchs 1 gelöst, beim dem das Steuermittel geeignet und eingerichtet ist den Oszillator zum Zwecke des Erkennens eines Kanalausfalls zur Erzeugung von ersten Signalanteilen anzusteuern, die Signalfragmente aufweisen, deren Frequenzen einer unteren Eckfrequenz des Frequenzbandes und einer oberen Eckfrequenz des Frequenzbandes entsprechen, wobei die Signalfragmente mit der unteren Eckfrequenz und die Signalfragmente mit der oberen Eckfrequenz abwechselnd erzeugbar sind. Aus der Wahl der Frequenzen der Signalfragmente leitet sich die Bezeichnung Eckfrequenzmodus für eine Betriebsweise des erfindungsgemäßen Radargerätes ab. Ferner ist bei einem erfindungsgemäßen Radargerät vorgesehen, dass das Steuermittel geeignet und eingerichtet ist, nach dem Senden der ersten Signalanteile das im Empfangskanal verarbeitete und an das Steuermittel weitergeleitete Empfangssignal zur Erkennung eines Ausfalls eines Empfangskanals auszuwerten, wozu das Steuermittel die Amplitude des Mischerbias auswertet, die durch die Signalfragmente der ersten Signalanteile hervorgerufen werden.

Das Steuermittel des erfindungsgemäßen Radargerätes ist vorteilhaft geeignet und eingerichtet, dass es die zum Zwecke des Erkennens eines Kanalausfalls erzeugten ersten Signalanteile zugleich auch für eine Kalibrierung des Oszillators zur Erzeugung des über die Sendeantenne ausgesendeten Signals verwendet. Dazu ist der Ausgang des Oszillators zum Steuermittel zurückgeführt. Das Ausgangssignal des Oszillators kann also im Steuermittel ausgewertet werden, um die Kennlinie des Oszillators zu ermitteln und gegebenenfalls durch Anpassung der vom Steuergerät ausgegebenen Spannungen im Hinblick auf einen gewünschten Verlauf anzupassen.

Beispielsweise kann für das Kalibrieren des Oszillators ein Frequenzzählverfahren eingesetzt werden, welches das Einstellen mehrerer Frequenzen im 24 GHz-Band ermöglicht, wobei jede einzelne Frequenz über eine Zeitdauer von etwa einer Millisekunde konstant gehalten werden muss. In dieser Zeit erfolgt eine effiziente Zählung der den Spannungen entsprechenden Frequenz im 24 GHz-Band.

Ziel einer geeigneten Folge der Signalfragmente ist eine möglichst starke Anregung der Empfangskanäle. Dieses kann entweder durch die Reflexionen des (gesendeten) Frequenzsprungs zwischen zwei Signalfragmenten des zur Erkennung des Kanalausfalls gesendeten Signalanteils an Objekten in der Umgebung des Radargerätes erfolgen (Fall 1) oder aber, falls keine Objekte im Umfeld des Radargerätes vorhanden sind, durch unterschiedliche Amplituden des Mischerbias durch die verschiedenen Signalfragmente des zur Erkennung des Kanalausfalls gesendeten Signalanteils (Fall 2).

Während der Fall 1 keine besonderen Anforderungen an die Folge der Frequenzen der Signalfragmente des zur Erkennung des Kanalausfalls gesendeten Signalanteils stellt, müssen im zweiten Falle hinreichend große Frequenzsprünge erfolgen, damit im Mischerbias hinreichend große Amplituden erkennbar sind, d.h. eine hinreichend große Dynamik im Mischerbias vorliegt. Da für typische Sendebandbreiten von 100 MHz oder 200 MHz ein näherungsweise linearer Verlauf zwischen der Amplitude des Mischerbias eines Kanals und der Absolutfrequenz bei 24 GHz existierten, sind möglichst große Sprünge zwischen zeitlich benachbarten Signalfragmenten während eines Taktes zur Erkennung eines Kanalausfalls bzw. für die Kalibrierung wünschenswert. Große Sprünge zwischen zeitlich benachbarten Signalfragmenten während eines Taktes können durch Radargeräte nach Anspruch erreicht werden.

Das Radargerät nach Anspruch 1 ermöglicht die Erkennung eines Kanalausfalls und eine Kalibrierung des Oszillators typischerweise in einer Startphase des Radargerätes. Das Radargerät und insbesondere das Steuermittel des Radargerätes sind dann so eingerichtet, dass zunächst geschätzte Spannungswerte für die oberen und die unteren Eckfrequenzen des Sende-Frequenzbandes eingestellt werden. Das Frequenzzählverfahren erlaubt ein Messen der den eingestellten Spannungen entsprechenden Frequenzen im Sende-Frequenzband. Durch Inter- oder Extrapolation können Spannungen für alle gewünschten Frequenzen innerhalb des Frequenzbandes näherungsweise bestimmt werden. Zum Zweck der Kanalausfallsdetektion werden die oberen und die unteren Eckfrequenzen vorzugsweise als alternierende Folge von 20 Signalfragmenten gesendet. Dies gewährleistet eine Anregung der Empfangskanäle mit 19 Frequenzsprüngen maximal zulässiger Höhe.

Das Radargerät mit den Merkmalen gemäß Anspruch 1 ermöglicht in Bezug auf die Kalibrierung des Oszillators, dass die geschätzten Spannungswerte für die Frequenzen zwischen den oberen und den unteren Eckfrequenzen durch das Steuermittel am Oszillator eingestellt werden. Auch hier wird durch Frequenzzählverfahren die Frequenz der vom Oszillator erzeugten Signalfragmente gemessen. Mittels einer Regression der Messpunkte kann dann durch das Steuermittel die Erfassung der Kennlinie des Oszillators bewirkt werden, die eine Kompensation der Nichtlinearität der Kennlinie des Oszillators erlaubt.

Ein erfindungsgemäßes Radargerät kann zum Zwecke der Zieldetektion geeignet und eingerichtet sein, wozu das Steuermittel den Oszillator so ansteuert,
∘ dass das Signal so erzeugbar ist, dass es mindestens einen weiteren Signalanteil hat,
∘ dass jeder weitere Signalanteil des Signals eine Folge von Signalfragmenten aufweist,
∘ dass erste Signalfragmente verschiedener weiterer Signalanteile des Signals unterschiedliche Frequenzen haben und aufeinander folgen und
∘ dass anschließend an die ersten Signalfragmente weitere Signalfragmente der verschiedenen weiteren Signalanteile aufeinander folgen und
∘ dass die Frequenz der Signalfragmente eines weiteren Signalanteils des Signals während eines Taktes gleich bleibt, sich während eines Taktes von Signalfragment zu Signalfragment um ein Frequenzinkrement erhöht oder während des Taktes von Signalfragment zu Signalfragment um das Frequenzinkrement erniedrigt.

Das Steuermittel eines erfindungsgemäßen Radargerätes ist dazu geeignet und eingerichtet, nach dem Senden des ersten Signalanteils das im Empfangskanal verarbeitete und an das Steuermittel weitergeleitete Empfangssignal zur Erkennung eines Ausfalls eines Empfangskanals auszuwerten. Dazu kann die Dynamik des Mischerbias auf zumindest einem der drei nachfolgend beschriebenen Wege ausgewertet werden.

Das Steuermittel kann geeignet und eingerichtet sein, zur Auswertung des an das Steuermittel weitergeleiteten Empfangssignals einen Mittelwert des an das Steuermittel weitergeleiteten Empfangssignals während eines Zeitintervalls und Minimal- und Maximalwerte des an das Steuermittel weitergeleiteten Empfangssignals während eines Zeitintervalls an das Steuermittel weitergeleiteten Empfangssignals zu ermitteln. Das Steuermittel ist dann geeignet und eingerichtet, zur Auswertung des an das Steuermittel weitergeleiteten Empfangssignals den Mittelwert und den Minimalwert und den Maximalwert miteinander und/oder mit vorgegebenen Werten zu vergleichen, und insbesondere Differenzen zwischen dem Mittelwert, dem Minimalwert und/oder dem Maximalwert zu bilden und diese mit vorgegebenen Werten zu vergleichen. Dieses kann ein erster Weg sein, eine hohe Dynamik des Mischerbias im Empfangssignal festzustellen.

Das Steuermittel kann geeignet und eingerichtet sein, zur Auswertung des an das Steuermittel weitergeleiteten Empfangssignals Sprünge im an das Steuermittel weitergeleiteten Empfangssignal zu vorgegebenen Zeitpunkten während des Sendens des ersten Signalanteils zu ermitteln und zu analysieren. Die vorgegebenen Zeitpunkte können die Zeitpunkte sein, zu denen im vom Oszillator erzeugten Signal Frequenzsprünge vorliegen. Dieses kann ein zweiter Weg sein, eine hohe Dynamik des Mischerbias im Empfangssignal festzustellen.

Das Steuergerät eines erfindungsgemäßen Radargeräts kann geeignet und eingerichtet sein, zur Auswertung des an das Steuermittel weitergeleiteten Empfangssignals das Frequenzspektrum des an das Steuermittel weitergeleiteten Empfangssignals während des Sendens des ersten Signalanteils zu ermitteln und zu analysieren. Dieses kann ein dritter Weg sein, eine hohe Dynamik des Mischerbias im Empfangssignal festzustellen.

Weitere Wege zur Feststellung einer hohen Dynamik des Mischerbias im Empfangssignal zur Erkennung eines Kanalausfalls sind möglich. Diese können Teile der aufgezeigten Wege aufweisen.

Die Ermittlung und Analyse des weitergeleiteten Empfangssignals und insbesondere des Mischerbias im weitergeleiteten Empfangssignal erfolgt zeitlich versetzt zur Zieldetektion, so dass zur Ausfallerkennung eines der Empfangskanäle und zur Zieldetektion gleiche Ressourcen, insbesondere gleiche Speicher- und Rechenressourcen des Steuermittels genutzt werden können.

Zur Erkennung eines Ausfalls eines Empfangskanals eines Radargerätes nach Anspruch 1 kann so vorgegangen werden, dass wiederkehrend das Steuermittel den Oszillator zum Erzeugen eines ersten Signalanteils ansteuert und das im Empfangskanal verarbeitete und an das Steuermittel weitergeleitete Empfangssignal zum Zweck der Erkennung eines Kanalausfalls eines der Empfangskanäle auswertet. Das Steuermittel kann den Ausfall eines Kanals erkennen, wenn ein Mischerbias des an das Steuermittel weitergeleiteten Empfangssignals während des Sendens eines ersten Signalabschnittes eine sehr geringe Dynamik aufweist.

Anhand der beigefügten Zeichnungen wird die Erfindung nachfolgend näher erläutert. Dabei zeigt:

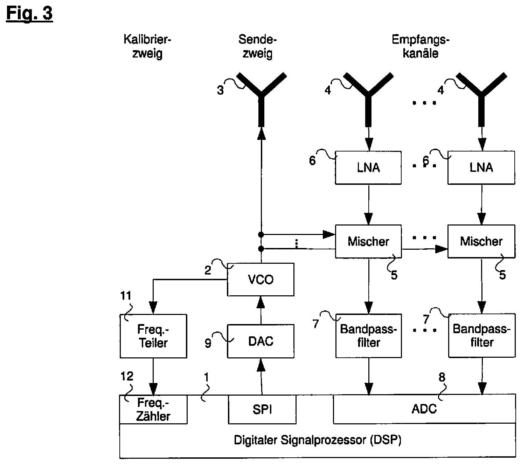

- Fig. 3: eine schematische Darstellung eines Radargeräts gemäß der Erfindung,

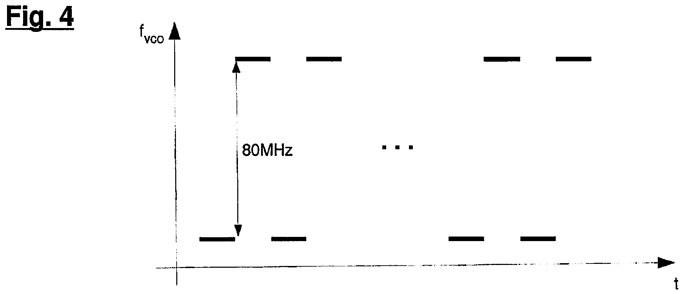

- Fig. 4: einen Signalverlauf im Eckfrequenzmodus,

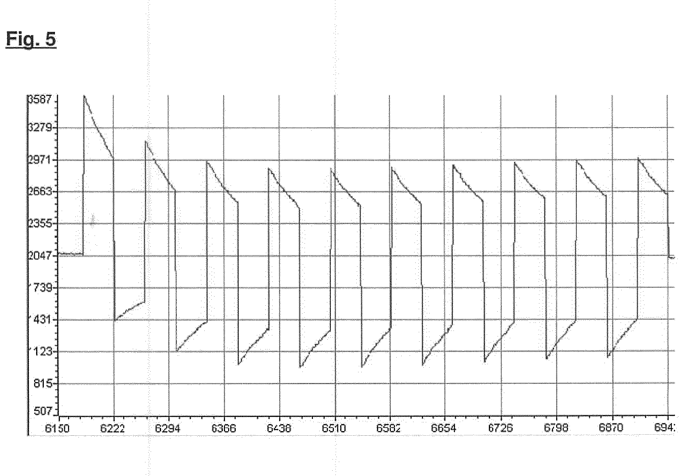

- Fig. 5: ein im Eckfrequenzmodus an das Steuermittel weitergeleitetes Empfangssignal bei fehlenden Zielen im Umfeld des Radargerätes,

Das in der Fig. 3 dargestellte erfindungsgemäße Radargerät weist eine große Übereinstimmung mit dem in der Fig. 1 dargestellten Radargerät auf, weshalb zunächst auf die Beschreibung des Radargerätes nach Fig. 1 verwiesen wird. Das Radargerät gemäß Fig. 3 unterscheidet sich im Wesentlichen durch ein anderes Steuermittel 1, welches erfindungsgemäß eingerichtet ist. So weist das Steuermittel 1 einen Frequenzzähler 12 auf, welcher das Radargerät zur Messung der Frequenz am Ausgang des Oszillators 2 nach dem Frequenzzählverfahren befähigt. Dem Frequenzzähler 12 ist ein Frequenzteiler 11 vorgeschaltet, der je nach Ausgestaltung des Frequenzzählers 12 entfallen kann. Da die Kalibrierung mittels des Frequenzzählers und des Ausgangssignals des Oszillators 2 erfolgt, ist das Zuführen eines Kalibriersignals vom Steuermittel zu einem Empfangskanal, wie es bei dem Radargerät gemäß Fig. 1 gezeigt ist, nicht notwendig.

Das in der Figur 3 dargestellte erfindungsgemäße Radargerät ist in der Lage im Eckfrequenzmodus (Fig. 4) erste Signalanteile zu erzeugen, die einerseits für eine Kalibrierung des Oszillators 2 des Radargerätes genutzt werden können und andererseits eine Erkennung eines Kanalausfalls eines Empfangskanals ermöglichen.

Der in der Fig. 4 dargestellte erste Signalanteil umfasst mehrere Signalfragmente. Die Signalfragmente haben eine Frequenz, die entweder der oberen Eckfrequenz oder der unteren Eckfrequenzen des für das Radargerät gewählten Frequenzbandes entsprechen. Das Steuermittel 1 steuert den Oszillator 2 unter Zwischenschaltung eines Digital-Analog-Konverters 9 so an, dass die Signalfragmente mit der oberen Eckfrequenz und Signalfragmente mit der unteren Eckfrequenz einander abwechseln. Die aufeinander folgenden Signalfragmente haben einen Frequenzabstand von 80 MHz, so dass Frequenzsprünge von 80 MHz beim Wechsel von einem Signalfragment zum folgenden Signalfragment vollzogen werden. Die Signalfragmente haben vorzugsweise eine Länge von 1 ms.

Die Fig. 6 zeigt die am Steuermittel 1 anliegenden weitergeleiteten und verarbeiteten empfangen Signale, wie sie bei einem realen Radargerät gemessen wurden. Die Figur zeigt einen Signalverlauf mit einer hohen Dynamik. Eine Unterscheidung von einem Rauschen, wie es sich bei einem defekten Kanal einstellen würde, ist für die Empfangssignale gemäß der Fig. 6 und 7 mit sehr einfachen und wenig aufwändigen Verfahren der Signalverarbeitungsmittel möglich. Es kann dadurch eine sehr hohe Zuverlässigkeit bei der Erkennung von Kanalausfällen erreicht werden.

Als Verfahren zur Erkennung eines Kanalausfalls reicht es beispielsweise aus den Mittelwert des Signals und dessen Maximal- und Minimalwert über den dargestellten Zeitbereich zu erfassen. Die Differenzen zwischen dem Mittelwert, dem Maximalwert und/oder dem Minimalwert betragen ein Vielfaches der mittleren Rauschamplitude eines defekten Kanals. Sobald also eine hinreichend große Differenz ermittelt wird, kann davon ausgegangen werden, dass der überwachte Empfangskanal korrekt arbeitet.

Als weitere Verfahren zur Erkennung des Kanalausfalls reicht es auch aus, die Höhe der Amplitude in Sprünge zu analysieren, welche sich zu bekannten Zeitpunkten vollziehen. Diese Analyse kann zusätzlich oder anstelle des zuvor beschriebenen Verfahrens durchgeführt werden.

Ebenso wäre es möglich, das Frequenzspektrum des an das Steuermittel weitergeleiteten Empfangssignals zu analysieren, da sich durch die Signalform Spitzen an bekannten Stellen im Spektrum ergeben werden, zum Beispiel bei 1 kHz und Vielfachen hiervon.

### Bezugszeichenliste

- 1: Steuermittel
- 2: Oszillator
- 3: Sendeantenne
- 4: Empfangsantenne
- 5: Mischer
- 6: Verstärker
- 7: Bandpassefilter
- 8: Analog-Digital-Konverter
- 9: Digital-Analog-Konverter

- 11: Frequenzteiler
- 12: Frequenzzähler

## Patentansprüche

1. Radargerät zum Senden eines Signals in einem Frequenzband
- mit einem Steuermittel (1),
- mit einem Oszillator (2), wobei ein Eingang des Oszillators (2) über einen Wandler (9) mit dem Steuermittel (1) verbunden ist, der Oszillator (2) mittels des Steuermittels (1) zum Erzeugen des Signals ansteuerbar ist und das mittels des Oszillators (2) erzeugte Signal an einem Ausgang des Oszillators (2) abgreifbar ist,
- wobei der Ausgang des Oszillators (2) mit einem Eingang des Steuermittels (1) verbunden ist,
- mit wenigstens einer Sendeantenne (3) zum Senden des am Ausgang des Oszillators (2) anliegenden Signals, wobei die Sendeantenne (3) mit dem Ausgang des Oszillators (2) verbunden ist,
- mit wenigstens einem Empfangskanal zum Empfangen eines Empfangssignals, zum Verarbeiten des Empfangssignals und zur Weiterleitung des verarbeiteten Empfangssignals zum Steuermittel (1), wobei der Empfangskanal zumindest eine Empfangsantenne (4) und einen Mischer (5) zum Mischen des Empfangssignals mit dem am Ausgang des Oszillators (2) anliegenden Signal aufweist, wobei der Mischer mit dem Ausgang des Oszillators (2) verbunden ist und wobei ein Ausgangssignal des Mischers ein Basisbandsignal und einen Mischerbias enthält,
**dadurch gekennzeichnet,**
- **dass** mit dem Steuermittel (1) der Oszillator (2) zur Erzeugung von ersten Signalanteilen (*K*) ansteuerbar ist, die Signalfragmente (*Kᵢ*), aufweisen, deren Frequenzen (*fᵢ^{K}*) eine untere Eckfrequenz (*f*_{*E*1}) des Frequenzbandes und eine obere Eckfrequenz (*f*_{*E*2}) des Frequenzbandes haben, wobei die Signalfragmente (*Kᵢ*) mit unterer Eckfrequenz (*f*_{*E*1}) und die Signalfragmente (*Kᵢ*) mit oberer Eckfrequenz (*f*_{*E*2}) abwechselnd erzeugbar sind,
- **dass** mit dem Steuermittel nach dem Senden der ersten Signalanteile das im Empfangskanal verarbeitete und an das Steuermittel weitergeleitete Empfangssignal zur Erkennung eines Ausfalls eines Empfangskanals auswertbar ist,
- wobei die Ermittlung und Analyse eines Mischerbias im weitergeleiteten Empfangssignal zum Zwecke der Erkennung eines Ausfalls eines Empfangskanals zeitlich versetzt zur Zieldetektion erfolgt, so dass zur Ausfallerkennung eines der Empfangskanäle und zur Zieldetektion gleiche Ressourcen, insbesondere gleiche Speicher- und Rechenressourcen des Steuermittels nutzbar sind,
- wobei das Steuermittel dadurch geeignet und eingerichtet ist eine hohe Dynamik des Mischerbias im Empfangssignal dadurch festzustellen,
- **dass**
- zur Auswertung des an das Steuermittel (1) weitergeleiteten Empfangssignals ein Mittelwert des an das Steuermittel weitergeleiteten Empfangssignals während eines Zeitintervalls und ein Minimal- und ein Maximalwert des an das Steuermittel (1) weitergeleiteten Empfangssignals ermittelbar sind, der Mittelwert und der Minimalwert und der Maximalwert miteinander und/oder mit vorgegebenen Werten vergleichbar sind, und insbesondere Differenzen zwischen dem Mittelwert, dem Minimalwert und/oder dem Maximalwert zu bilden und diese mit vorgegebenen Werten zu vergleichen, und/oder
- zur Auswertung des an das Steuermittel weitergeleiteten Empfangssignals die Höhe von Sprüngen im an das Steuermittel weitergeleiteten Empfangssignal zu vorgegebenen Zeitpunkten während des Sendens des ersten Signalanteils ermittelbar und analysierbar sind, und/oder
- zur Auswertung des an das Steuermittel (1) weitergeleiteten Empfangssignals das Frequenzspektrum während des Sendens des ersten Signalanteils ermittelbar und analysierbar ist um Spitzen im Spektrum an bekannten Stellen festzustellen.

2. Verfahren zur Erkennung eines Ausfalls eines Empfangskanals eines Radargerätes nach Anspruch 1, **dadurch gekennzeichnet, dass** wiederkehrend das Steuermittel (1) den Oszillator (2) zum Erzeugen des ersten Signalanteils ansteuert und das im Empfangskanal verarbeitete und an das Steuermittel (1) weitergeleitete Empfangssignal zum Zweck der Erkennung eines Kanalausfalls eines der Empfangskanäle auswertet.

## Claims

1. Radar device for transmitting a signal in a frequency band
- having a control means (1),
- having an oscillator (2), wherein an input of the oscillator (2) is connected to the control means (1) by means of a converter (9), the oscillator (2) can be actuated by the control means (1) in order to generate the signal, and the signal generated by the oscillator (2) can be tapped at an output of the oscillator (2),
- wherein the output of the oscillator (2) is connected to an input of the control means (1),
- having at least one transmission antenna (3) for transmitting the signal which is at the output of the oscillator (2), wherein the transmission antenna (3) is connected to the output of the oscillator (2),
- having at least one receiver channel for receiving a receiver signal, processing the receiver signal and forwarding the processed receiver signal to the control means (1), wherein the receiver channel has at least one receiver antenna (4) and a mixer (5) for mixing the receiver signal with the signal which is at the output of the oscillator (2), wherein the mixer is connected to the output of the oscillator (2) and wherein an output signal of the mixer includes a baseband signal and a mixer bias,
**characterised in that**
- the oscillator (2) can be actuated using the control means (1) to generate first signal components (*K*) having signal fragments (*Kᵢ*) whose frequencies (*fᵢ^{K}*) have a lower cut-off frequency (*f_{E1}*) of the frequency band and an upper cut-off frequency (*f_{E2}*) of the frequency band, wherein the signal fragments (*Kᵢ*) with a lower cut-off frequency (*f_{E1}*) and the signal fragments (*Kᵢ*) with an upper cut-off frequency (*f_{E2}*) can be generated alternately,
- the control means, after the transmission of the first signal components, can be used to evaluate the receiver signal processed in the receiver channel and forwarded to the control means in order to detect a failure of a receiver channel,
- wherein the ascertainment and analysis of a mixer bias in the forwarded receiver signal for the purpose of detecting a failure of a receiver channel is carried out with a time offset with respect to the target detection, such that, in order to detect a failure of one of the receiver channels and for target detection, the same memory and computing resources of the control means can be utilised in particular,
- wherein, as a result, the control means is suitable and configured to detect a high dynamic of the mixer bias in the received signal through the fact that
- in order to evaluate the receiver signal forwarded to the control means (1), a mean value of the receiver signal forwarded to the control means during a time interval and minimum and maximum values of the receiver signal forwarded to the control means (1) can be ascertained, the mean value and the minimum value and the maximum value can be compared with each other and/or with predetermined values, and in particular to form differences between the mean value, the minimum value and/or the maximum value and to compare them with predetermined values, and/or
- in order to evaluate the receiver signal forwarded to the control means, the magnitude of jumps in the receiver signal forwarded to the control means at predetermined times during the transmission of the first signal component can be ascertained and analysed, and/or
- in order to evaluate the receiver signal forwarded to the control means (1), the frequency spectrum during the transmission of the first signal component can be ascertained and analysed in order to detect peaks in the spectrum at known points.

2. Method for detecting a failure of a receiver channel of a radar device according to claim 1, **characterised in that** the control means (1) repeatedly actuates the oscillator (2) in order to generate the first signal component and evaluates the receiver signal processed in the receiver channel and forwarded to the control means (1) for the purpose of detecting a channel failure of one of the receiver channels.

## Revendications

1. Appareil radar pour émettre un signal dans une bande de fréquence
- avec un moyen de commande (1),
- avec un oscillateur (2), dans lequel une entrée de l'oscillateur (2) est connectée au moyen de commande (1) au moyen d'un convertisseur (9), l'oscillateur (2) peut être commandé au moyen du moyen de commande (1) pour produire le signal, et le signal produit au moyen de l'oscillateur (2) peut être capter à une sortie de l'oscillateur (2),
- dans lequel la sortie de l'oscillateur (2) est connectée à une entrée du moyen de commande (1),
- avec au moins une antenne d'émission (3) pour émettre le signal présent à la sortie de l'oscillateur (2), dans lequel l'antenne d'émission (3) est connectée à la sortie de l'oscillateur (2),
- avec au moins un canal de réception pour recevoir un signal de réception, pour traiter le signal de réception et pour transmettre le signal de réception traité au moyen de commande (1), dans lequel le canal de réception présente au moins une antenne de réception (4) et un mélangeur (5) pour mélanger le signal de réception avec le signal présent à la sortie de l'oscillateur (2), dans lequel le mélangeur est connecté à la sortie de l'oscillateur (2) et dans lequel un signal de sortie du mélangeur contient un signal de bande de base et une polarisation de mélangeur,
**caractérisé en ce que**
- le moyen de commande (1) peut être utilisé pour commander l'oscillateur (2) afin de produire des premières fractions de signal (*K*) qui présentent des fragments de signal (*Kᵢ*) dont les fréquences (*fᵢ^{K}*) présentent une fréquence de coupure inférieure (*f_{E1}*) de la bande de fréquence et une fréquence de coupure supérieure (*f_{E2}*) de la bande de fréquence, dans lequel les fragments de signal (*Kᵢ*) présentant une fréquence de coupure inférieure (*f_{E1}*) et les fragments de signal (*Kᵢ*) présentant une fréquence de coupure supérieure (*f_{E2}*) peuvent être produits alternativement,
- après l'émission des premières fractions de signal, le moyen de commande peut évaluer le signal de réception traité dans le canal de réception et transmis au moyen de commande afin de détecter une défaillance d'un canal de réception,
- dans lequel la détermination et l'analyse d'une polarisation de mélangeur dans le signal de réception transmis en vue de détecter une défaillance d'un canal de réception sont effectuées avec un retard par rapport à une détection de cible, de sorte que des ressources identiques, en particulier des ressources de mémoire et de calcul identiques du moyen de commande, peuvent être utilisées pour la détection de défaillance d'un des canaux de réception et pour la détection de cible,
- dans lequel le moyen de commande est ainsi adapté et configuré pour déterminer une dynamique élevée de la polarisation de mélangeur dans le signal de réception,
- **en ce que**
- pour évaluer le signal de réception transmis au moyen de commande (1), une valeur moyenne du signal de réception transmis au moyen de commande pendant un intervalle de temps et une valeur minimale et une valeur maximale du signal de réception transmis au moyen de commande (1) peuvent être déterminées, la valeur moyenne et la valeur minimale et la valeur maximale peuvent être comparées les unes aux autres et/ou à des valeurs prédéterminées, et en particulier des différences entre la valeur moyenne, la valeur minimale et/ou la valeur maximale peuvent être formées et celles-ci peuvent être comparées à des valeurs prédéterminées, et/ou
- pour évaluer le signal de réception transmis au moyen de commande, les hauteurs de sauts dans le signal de réception transmis au moyen de commande peuvent être déterminées et analysées à des moments prédéterminés pendant l'émission de la première fraction de signal, et/ou
- pour évaluer le signal de réception transmis au moyen de commande (1), le spectre fréquentiel peut être déterminé et analysé pendant l'émission de la première fraction de signal afin de détecter des pics dans le spectre en des points connus.

2. Procédé pour détecter une défaillance d'un canal de réception d'un appareil radar selon la revendication 1, **caractérisé en ce que** le moyen de commande (1) commande de manière répétée l'oscillateur (2) pour produire la première fraction de signal et exploite le signal de réception traité dans le canal de réception et transmis au moyen de commande (1) pour détecter une défaillance de canal de l'un des canaux de réception.
